Europäisches Patentamt

**European Patent Office**

**Office européen des brevets**

(19)

(11) Numéro de publication: **0 159 955**
A2

# (12) DEMANDE DE BREVET EUROPEEN

(21) Numéro de dépôt: **85440012.4**

(22) Date de dépôt: **21.02.85**

(51) Int. Cl.⁴: **B 01 D 53/36**, F 23 J 15/00

(30) Priorité: **28.02.84 FR 8403193**

(43) Date de publication de la demande: **30.10.85**
**Bulletin 85/44**

(84) Etats contractants désignés: **AT BE CH DE IT LI LU NL**

(71) Demandeur: **FONDIS, Société Anonyme dite:, 5, rue des Pélerins, F-68800 Thann (FR)**

(72) Inventeur: **Richard, Robert, 7, rue des Pèlerins, F-68800 Thann (FR)**

(74) Mandataire: **Metz, Paul, Cabinet METZ PATNI 95, rue de la Ganzau, F-67100 Strasbourg (FR)**

(54) Réacteur catalytique à insérer dans le tuyau d'évacuation des fumées d'un appareil de chauffage.

(57) Réacteur catalytique caractérisé en ce qu'il se monte par simple emboîtement et en ce que l'élément catalyseur (8) est monté dans un support intérieur mobile (7) entre une position opérante dans laquelle il obture toute la section de passage des fumées et une position escamotée dégageant partiellement ou totalement ladite section de passage en vue de son remplacement ou d'un passage direct des fumées.

Cette invention intéresse les fabricants d'appareils de chauffage et leur conduit d'évacuation des fumées.

L'invention se rapporte à un réacteur catalytique à insérer dans le tuyau d'évacuation des fumées d'un appareil de chauffage, notamment, mais non exclusivement domestique.

L'utilisation des réacteurs catalytiques est bien connue dans les fours électrodomestiques dits à pyrolyse.Le réacteur catalytique est constitué par un élément poreux comportant une multitude de canaux longitudinaux dont les parois sont imprégnées d'un catalyseur chimique, véritable mélange de sels et d'oxydes de métaux précieux répartis en concentration de 0,1 à 10 %.

Les métaux couramment utilisés dans ce type de réacteurs catalytiques sont le platine et le palladium dont les limites d'utilisation en température se situent respectivement à 700-750° C et 450-500°C.

Ces réacteurs catalytiques ont pour but de traiter les gaz lors des séquences de nettoyage par carbonisation des projections graisseuses principalement sur les parois.

Cette épuration provient de l'oxygénation simple ou multiple de l'oxyde de carbone des gaz de combustion et des corps volatiles provenant de la combustion. Elle permet d'obtenir, en sortie, un flux d'air parfaitement propre, exempt d'éléments polluants.

Le caractère exothermique de cette réaction n'apporte aucun avantage supplémentaire dans le nettoyage des fours par pyrolyse en raison de la déjà trop grande quantité de chaleur à évacuer.

Il en va tout autrement dans le cas d'un appareil de chauffage dans lequel on cherche à parfaire le rendement thermique et à faciliter l'usage.

La présente invention cherche à atteindre ce double but.

En effet, l'utilisateur d'un appareil de chauffage, quel qu'en soit le combustible, est amené à nettoyer le tuyau et le conduit d'évacuation des fumées au moins une fois par an et même plus fréquemment selon la nature du combustible utilisé et la qualité de la combustion.

Le caractère particulièrement salissant de ces travaux de nettoyage amène le propriétaire ou l'utilisateur à préférer les confier à un professionnel, les différer ou à limiter l'usage de ce type de chauffage.

Par ailleurs, de nombreux appareils de chauffage présentent un rendement peu élevé en raison d'un important flux de calories emportées par les fumées et évacuées à l'extérieur sans bénéfice particulier pour les chambres que traverse le conduit d'évacuation des fumées.

La présente invention a pour but d'épurer suffisamment les fumées pour les débarrasser des résidus salissants de combustion, afin de se dispenser de ramonage et nettoyage ou tout au moins d'en diminuer notablement la fréquence. La présente invention a également pour but d'apporter un surcroît de chaleur à l'ambiance par la récupération d'une partie des calories emportées par les fumées, mais aussi le caractère exothermique de la réaction de catalyse.

A cet effet, l'invention se rapporte à un réacteur catalytique à insérer dans le tuyau d'évacuation des fumées d'un appareil de chauffage. Ce réacteur est caractérisé en ce qu'il permet de s'insérer, par simple emboîtement dans le tuyau d'évacuation et qu'il présente une position opérante dans laquelle l'élément catalyseur est en fonction sur le trajet des fumées et une position escamotée dans

- 3 -

laquelle le passage des fumées est totalement libre.

Plus précisément, l'élément catalyseur se trouve monté dans un support mobile occupant toute la section de passage des fumées dans le tuyau ou conduit d'évacuation. Ce support est réalisé mobile pour permettre la libération partielle ou totale de la section de passage.

En vue d'améliorer l'échange thermique, le corps du réacteur catalytique sera pourvu d'ailettes radiales ou longitudinales.

Quelques uns des nombreux avantages de l'invention sont regroupés dans la liste ci-après:

. Ensemble compact à dimensions normalisées permettant de s'insérer dans le tuyau d'évacuation par simple emboîtement.

. Libération du passage d'évacuation des fumées.

. Remplacement aisé de l'élément catalyseur.

. Commande simple en position de l'élément catalyseur.

. Fabrication mécanique simple.

. Robustesse d'ensemble.

. Réduction notable de la fréquence de nettoyage des cheminées.

. Suppression pratiquement totale du risque de feu de cheminée.

Les caractéristiques techniques de la présente invention et d'autres avantages sont consignés dans la description ci-après effectuée à titre d'exemple non limitatif sur plusieurs variantes conformes au même concept inventif, en référence au dessin annexé dans lequel :

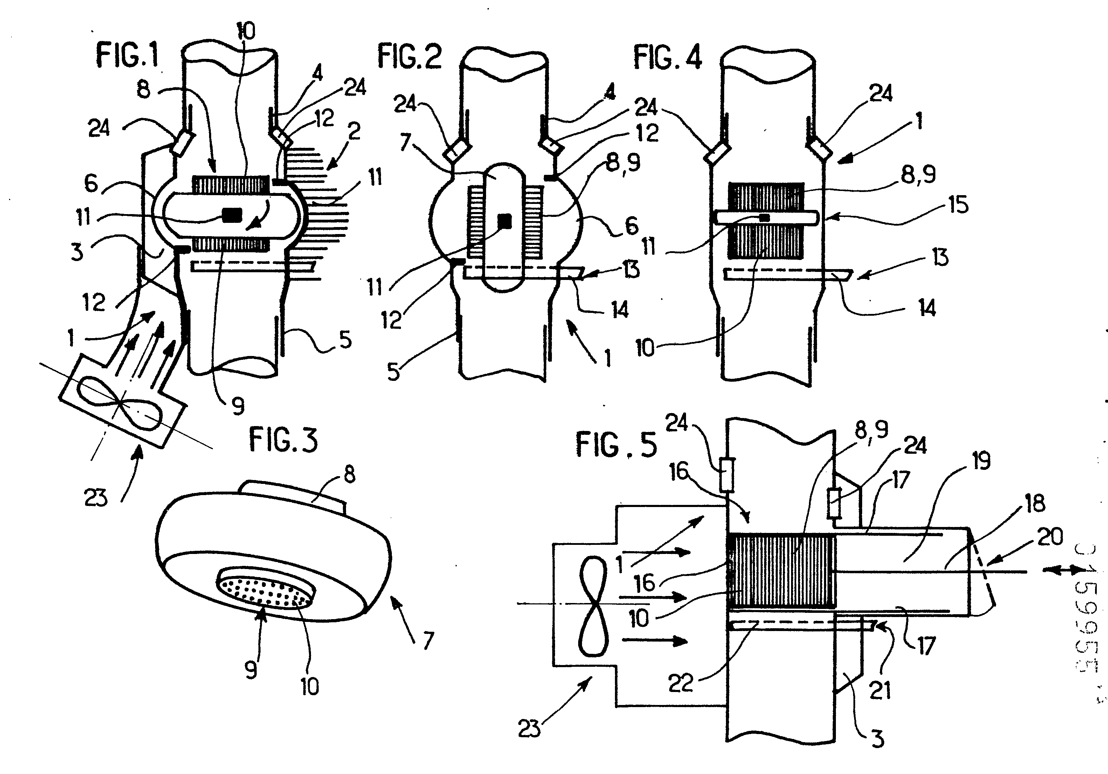

. La figure 1 est une vue schématique en coupe longitudinale du réacteur catalytique selon l'invention.

. La figure 2 est la même vue schématique en coupe longitudinale, ensemble catalytique en position escamotée.

. La figure 3 est une vue en perspective du support et de son élément catalyseur.

. La figure 4 est une vue en coupe longitudinale d'une variante à support porte-élément mince.

. La figure 5 est une vue en coupe longitudinale d'un mode de réalisation à support coulissant.

Le réacteur catalytique selon l'invention est appelé à être inséré par simple emboîtement dans le tuyau ou le conduit d'évacuation des fumées d'un appareil de chauffage domestique ou industriel, ainsi que dans le conduit de raccordement d'une cheminée entre l'avaloir et le conduit d'évacuation de la maison ou du bâtiment.

Le réacteur catalytique se présente sous la forme d'un tronçon 1 à insérer dans le tuyau d'évacuation. La surface latérale extérieure de son corps sera pourvue d'ailettes radiales 2 ou longitudinales 3 ou hélicoïdales pour améliorer l'échange thermique. Il est à remarquer que les ailettes longitudinales ou verticales procureront le même effet technique concernant l'échange thermique, mais apporteront, en plus, une rigidité mécanique supplémentaire au corps du tronçon 1.

Le tronçon 1 est conformé à chacune de ses extrémités, de manière à pouvoir s'insérer dans le tuyau de raccordement au conduit d'évacuation par simple emboîtement. De façon simple, les extrémités haute 4 et basse 5 présenteront respectivement des diamètres réduit et élargi ou inversement, mais non nécessairement, car, comme on le verra ci-après, le réacteur catalytique tel que défini ci-après peut être monté dans les deux sens.

Le réacteur affecte une forme générale cylindrique légèrement en surépaisseur présentant dans sa partie centrale une saillie annulaire 6, à contours sphériques ou semi sphériques, appelée à servir de logement à un support intérieur mobile 7 sur lequel est monté l'élément catalyseur 8. Ce dernier se présente sous la forme d'un bloc 9 traversé par une multitude de canaux 10 imprégnés de sels et oxydes de métaux précieux réalisant la catalyse chimique.

Le support mobile 7 est monté pivotant et maintenu en position et en rotation par un point 11 solidaire d'un axe traversant le corps du réacteur catalytique, axe terminé par une poignée de commande.

Des butées d'arrêt 12, démontables, présentes sur les bords intérieurs de la saillie 6, servent à l'immobilisation du support en position opérante.

Une entrée d'air obturable 13 est prévue dans le corps du réacteur, à la base de l'élément catalytique, par exemple au niveau de la base du bloc catalyseur 9. Cette entrée s'avère nécessaire pour permettre un apport d'oxygène suffisant au bon fonctionnement du catalyseur. Selon le cas, un support conformé en conduit 14 dirigera le flux d'air admis vers la base de l'élément catalyseur 8.

Le support mobile intérieur 7 et son bloc catalyseur 9 présentent des dimensions adaptées par rapport au volume intérieur, de manière à permettre un retournement complet et une mise en position dite ouverte (figure 2) dans laquelle l'ensemble intérieur est pivoté de 90°.

La hauteur du bloc catalyseur 8 permettra dans cette position de libérer la section de façon

- 6 -

suffisante pour un passage à un débit sensiblement supérieur.

Dans une version simplifiée, (figure 3), le support 7 présente une épaisseur notablement plus faible permettant de délimiter la position d'arrêt par une simple incurvation annulaire 15 de faible relief, résultant d'une empreinte à la presse, mandrin expansif ou autre outil de rétreint.

L'extraction du bloc catalyseur 8 lors de l'entretien périodique s'effectue bien simplement en renversant entièrement le support. Le bloc catalyseur s'extrait simplement par gravité de son support.

La ou les variantes représentées par les figures suivantes procèdent de la même idée générale inventive qui consiste à réaliser un tronçon comprenant à son intérieur un support mobile maintenant un élément catalyseur actif susceptible de déplacement ou de modification de présentation entre une position opérante dans laquelle tout le flux des fumées le traverse et une position de repos dans laquelle la section du tuyau ou du conduit est partiellement ou totalement libérée.

La variante représentée en figure 5 comporte un support coulissant 16 le long de guides transversaux 17 au tronçon 1. Le bloc catalyseur 9 est sollicité en déplacements transversaux par une tige de manoeuvre 18 d'une position opérante dans laquelle il occupe toute la section de passage à une position escamotée dans un logement annexe 19 dans laquelle, selon sa position, il dégage partiellement ou totalement la section de passage du tronçon.

Le logement annexe est, bien entendu, formé au droit et dans la continuation des guides transversaux 17. Il comporte une ouverture obturable 20 latérale ou en fin de course, c'est à dire en extrémité de logement pour l'extraction du bloc catalyseur lors de son remplacement.

Ici également, est prévue une entrée d'air transversale obturable 21 pour le bon fonctionnement du catalyseur par l'intermédiaire, par exemple, d'un support approprié 22 réalisant l'injection et la répartition de l'air à la base du bloc catalyseur.

D'autres formes de réalisation procédant du même concept inventif s'avèrent possibles.

Pour favoriser l'évacuation des calories par l'intermédiaire des ailettes 2 ou 3, on prévoit le passage d'un flux d'air envoyé perpendiculairement ou tangentiellement sur les ailettes par un ventilateur extérieur 23.

A titre additionnel, on prévoit, dans la surface latérale du tronçon 1, en dehors de la zone d'emplacement du bloc catalyseur, un ou plusieurs hublots 24 de contrôle et de vision.

On a décrit ci-dessus plusieurs variantes découlant du même concept inventif, il est bien entendu que diverses modifications et variations directes, substitutions par des éléments ou moyens équivalents, adjonction d'élément(s) inopérant(s) et autres changements sans apport inventif entrent pleinement dans le cadre de la présente protection.

REVENDICATIONS

1. Réacteur catalytique à insérer dans le tuyau ou le conduit d'évacuation des fumées d'un appareil de chauffage domestique ou industriel caractérisé en ce qu'il se monte par simple emboîtement et en ce que l'élément catalyseur (8) avec son bloc actif (9) est monté sur un support intérieur mobile (7) et occupe en position opérante toute la section de passage des fumées, ledit support et son catalyseur pouvant occuper une position escamotée dégageant partiellement ou totalement la section de passage.

2. Réacteur catalytique selon la revendication 1 caractérisé en ce que le support mobile (7) est pivotant à l'intérieur de la chambre centrale.

3. Réacteur catalytique selon les revendications 1 et 2 caractérisé en ce que le support mobile (7) est un volume plein à tranche semi-circulaire, à faces parallèles planes et à chants sphériques ou semi-sphériques et en ce que le corps du tronçon catalytique présente en partie centrale une saillie annulaire (6) de forme adaptée aux chants du support (7) coopérant avec ceux-ci en position opérante pour garantir l'étanchéité du passage au niveau des bords intérieurs.

4. Réacteur catalytique selon les revendications 2 et 3 caractérisé en ce que le support (7) est plat et la saillie (6) peu marquée par une simple incurvation annulaire (15).

5. Réacteur catalytique selon les revendications de 2 à 4 caractérisé en ce que deux bords semi-circulaires intérieurs opposés de la saillie (6) sont équipés de butées (12).

6. Réacteur catalytique selon la revendication 1 caractérisé en ce que le bloc catalyseur (9) est monté sur un support coulissant (16) le long de guides transversaux (17) pour des déplacements transversaux dans ou hors d'un logement transversal (19) disposé en prolongation des guides (17) dans lequel il peut entrer en vue de son extraction du corps du tronçon.

7. Réacteur catalytique selon les revendications précédentes prises dans leur ensemble caractérisé en ce que l'on prévoit une entrée d'air transversale obturable (13), (21) à travers un support (22) pour l'injection et la répartition de l'air à la base du bloc catalyseur.

8. Réacteur catalytique selon les revendications précédentes prises dans leur ensemble caractérisé en ce que la surface latérale du corps du tronçon est équipée en dehors de la zone d'emplacement de l'élément catalyseur d'un ou de plusieurs hublot(s) (24) de vision et de contrôle.

9. Réacteur catalytique selon les revendications de 1 à 3 caractérisé en ce que le corps du réacteur catalytique est pourvu d'ailettes radiales (2) longitudinales (3) ou hélicoïdales.

10. Réacteur catalytique selon les revendications 1, 2, 3 et 9 prises dans leur ensemble, caractérisé en ce que l'on prévoit un ventilateur extérieur (23), soufflant sur les ailettes.

FIG.1

FIG.2

FIG.4

FIG.3

FIG.5

pl. unique